# EUROPEAN PATENT SPECIFICATION

(11) **EP 0 580 328 B1**
(45) Date of publication and mention of the grant of the patent: **02.04.1997**
(21) Application number: 93305383.7
(22) Date of filing: 08.07.1993
(51) Int. Cl.: C08F 299/04, C08G 63/91, C08F 283/01

(54) **Methacrylate functional polyesters**
Polyester mit Methacrylatgruppen
Polyesters à fonction méthacrylate

(30) Priority: 24.07.1992 US 919469
(43) Date of publication of application: 26.01.1994
(73) Proprietor: ROHM AND HAAS COMPANY, Philadelphia Pennsylvania 19105 (US)
(72) Inventor: Bors, Daniel Arthur, Warminster, Pennsylvania 18974 (US); Emmons, William David, Huntingdon Valley, Pennsylvania 19006 (US)
(74) Representative: Angell, David Whilton

(56) References cited:
- EP-A- 0 457 276
- DATABASE WPI Week 9320, Derwent Publications Ltd., London, GB; AN 93-164523 & JP-A-5 097 945 (SHOWA HIGH POLYMER CO) 20 April 1993

## Description

The invention relates to methacrylate functional polyesters. In particular, the present invention relates to radical initiated compositions that form gel coats and plastic materials.

Known radical initiated compositions that form gel coats and plastic materials are conventionally composed of unsaturated polyesters in a polymerizable solvent; the most common polymerizable solvent is styrene because it provides good curing characteristics with both the polyester and other polymerizable monomers. However, such materials exhibit poor weathering due to the presence of the styrene component.

Common multifunctional (meth)acrylate-polyesters are the reaction products of hydroxyl-functional polyesters and (meth)acrylic acid. These materials generally contain undesirable by-products (because of the high process temperatures which are required) that detract from the properties of the cured materials. Some of these properties can be improved for example by using isocyanate to cause chain extension between the hydroxyl-functional polyesters and (meth)acrylic acid; however, this technique is expensive.

US-A-4217396, US-A-4217439, US-A-4218515 and US-A-4229505 disclose crosslinked polymers from polyfunctional acrylates and difunctional acetoacetates, diacetoacetamides, ureadiacetoacetamides and cyanoacetates with diacetoacetoamides and urea diacetoacetamides. The crosslinking is activated by strongly basic catalysts such as sodium methoxide, sodium metal, sodium ethylate, and benzyl-trimethyl ammonium methoxide. US-A-4408018 discloses the use of base catalysts with sufficient activity to activate Michael cure reactions, such as potassium hydroxide, tetrabutyl ammonium hydroxide, potassium amylate, sodium methoxide, potassium ethoxide and other alkali metal derivatives of alcohol, and quaternary ammonium bases. However, amines are disclosed to be generally not sufficiently strong to catalyze the Michael reaction between acrylic polymers having pendant acetoacetate groups and multifunctional acrylic esters. ASL-A-8540807 discloses that strong bases such as alkali metal hydroxides or alcoholates cause yellowing and cloudiness with the acrylic polymers having pendant acetoacetate groups. They specify other active methylene compounds, with activation by diazabicyclooctane; halides of quaternary ammonium compounds, especially fluorides; organic phosphonium salts; amidines, such as tetramethylguanidine, diazabicycloundecene, and diazabicyclononene; phosphanes; alkali metal alcoholates; and quaternary ammonium compounds, such as alkylammonium, arylammonium and/or benzylammonium hydroxides or carbonates. Also disclosed is that these catalysts or catalyst mixtures can be used in the presence of tertiary aliphatic amines which in themselves are not active at room temperature.

The present invention seeks to overcome the problems associated with the prior art.

According to a first aspect of the present invention there is provided a reactive multi-functional methacrylate-polyester obtainable from a Carbon-Michael reaction of a polyester having unsaturated functionality and an acetoacetoxyethyl methacrylate monomer in the presence of a strong base catalyst.

Preferably, the reactive multi-functional methacrylate-polyester is obtained from a Carbon-Michael reaction of a polyester having unsaturated functionality and an acetoacetoxyethyl methacrylate monomer in the presence of a strong base catalyst.

Preferably, the multi-functional methacrylate-polyester is a maleate or fumarate functional polyester.

Preferably, the strong base catalyst is selected from the group consisting of tetramethylguanidine, tetrabutylammonium hydroxide, and sodium ethoxide.

According to a second aspect of the present invention there is provided a reactive gel coat having improved weatherability comprising the multi-functional methacrylate-polyester of the first aspect admixed with a suitable component.

According to a third aspect of the present invention there is provided a radiation curable composition comprising the multi-functional methacrylate-polyester of the first aspect or the composition of the second aspect and a photoinitiator.

According to a fourth aspect of the present invention there is provided a process for preparing a reactive multifunctional methacrylate-polyester comprising reacting an unsaturated polyester with an acetoacetoxyethyl methacrylate monomer in the presence of a strong base catalyst.

Preferably, the reaction is run in the absence of solvent.

Preferably, the reaction is run in a methacrylate-functional polymerizable solvent. Preferably, the polymerizable solvent is selected from the group consisting of methyl methacrylate, butyl methacrylate, ethylene glycol dimethacrylate and hydroxypropyl methacrylate.

One advantage of the present invention is that it provides a high performance, inexpensive methacrylate polyester. Another advantage is that it provides a methacrylate functional polyester which does not include styrene as a component and is useful in gel coats which do not suffer from the weathering problems of the conventional gel coats.

The invention therefore provides a new class of fast-curing methacrylate-functional polyesters and a method for preparing these methacrylate-functional polyesters. The process involves Carbon-Michael addition of acetoacetoxyethyl methacrylate monomer with unsaturated polyesters. The resulting multifunctional methacrylate-pendant polyester is useful in coatings such as gel coats or glass reinforced plastics which give higher impact resistant materials with superior weathering properties as compared with conventional polyester/styrene compositions. The material can also be cured by ultraviolet or electron beam radiation.

The unsaturated polyester can be produced by various techniques known in the art for the preparation of polyesters from reactants which will yield unsaturation in the polyester product. The composition can be varied by using various suitable glycols and diacids or diesters.

Unsaturated polyesters are readily prepared as indicated in the Encyclopedia of Chemical Technology (Vol. 18, 3rd Edition, John Wiley and Sons, New York, 1982) from polyols and di- and tribasic acids or suitable derivatives by direct esterification. Other common ester forming methods, transesterification, ester interchange and use of acid chlorides, may also be used.

The polyester must contain at least some unsaturation, preferably of the fumarate type. Unsaturated polyesters bearing maleate functionality may also be used since the maleate functionality can be isomerized to fumarate functionality. Fumaric acid, maleic acid or their esters or maleic anhydride can be used as the sole acid component or in combination with other di- and tricarboxylic acids and esters. Dicarboxylic acids which may be used to prepare the polyester component include, for example, succinic, adipic, suberic, azelaic, sebacic, pimelic, glutaric, phthalic and isophthalic acids. It is highly preferred to avoid the use of malonic acid because this material will compete with acetoacetoxyethyl methacrylate in the Michael reaction with the unsaturated groups leading to the formation of high molecular weight and/or gelled polymer solutions.

For outdoor durability, it is preferred that the dibasic acid moieties other than fumaric and maleic acid are cycloaliphatic or aliphatic. A particularly preferred coacid for hardness and durability is cyclohexane dicarboxylic acid.

Suitable examples of polyols with functionality of 2 or more include ethylene glycol, propylene glycol, butanediol, pentanediol, hexanediol, polyethylene glycol, glycerol, trimethylolethane, trimethylolpropane, pentaerythritol, dipentaerythritol, and tripentaerythritol. One drawback with polyesters containing fumarate and maleate moieties is their susceptibility to hydrolysis. In order to minimize this effect, it is preferred to use 2,2-alkyl substituted-1,3-propanediols as the polyol component. Examples of these include neopentyl glycol, neopentyl glycol mono(hydroxypivalate), 2,2,4-trimethyl-1,3-pentanediol, trimethylolpropane and cyclohexane dimethanol.

For the best water resistance, it is preferred that the endgroups of the polyester are hydrophobic rather than hydrophilic groups. One preferred route to such polyesters is use of relatively high-boiling monofunctional alcohol is combination with polyols in the reaction with dibasic acids. This can be done in steps -- first preparing an acid-terminated polyester, then reducing the acid number to a low value by reaction with monofunctional alcohol. A preferred monofunctional alcohol is 2-ethylhexanol. A second preferred route is post-reaction of hydroxy-terminated polyester with acetic anhydride. A third route is reaction of polyester with an excess of isocyanate, followed by addition of monofunctional alcohol. A fourth route to such polyesters is preparation from diesters and glycols by transesterification.

Preferably, the unsaturated polyester should have at least two unsaturated groups per molecule with a number average weight greater than about 500, an equivalent weight less than about 700 grams per unsaturated component, and less than about 0.2 equivalent of acid per 100 grams of polyester solids. Preferred polyesters have a number average weight greater than about 900, an equivalent weight less than about 500 grams per unsaturated component, and less than about 0.1 equivalent of acid per 100 grams of polyester solids.

The prefered ratio of acetoacetoxyethyl methacrylate reactant to the unsaturated functionality on the polyester can range from 0.1:1 to 1:1 with a more preferred ratio being 1:1.

The Carbon-Michael reaction can be initiated by adding a strongly basic catalyst to the reactants at room temperature over a period of 8 to 24 hours. Examples of these strong base catalysts are tetramethylguanidine, tetrabutylammonium hydroxide, and sodium ethoxide.

After the reaction is completed, it is preferred that the base catalyst be inactivated by any known method such as, for example, neutralization, ion exchange and distillation to provide more stable materials.

The reaction may be run with or without additional solvent. Non-reactive solvents such as xylene, isopropyl alcohol and methyl ethyl ketone may be used. Polymerizable solvents which contain methacrylate functionality, but not acrylate functionality, may also be employed. Examples of useful polymerizable solvents include methyl methacrylate, ethyl methacrylate, isopropyl methacrylate, isobutyl methacrylate, butyl methacrylate, lauryl methacrylate, stearyl methacrylate, isobornyl methacrylate, 2-hydroxyethyl methacrylate, hydroxypropyl methacrylate, styrene, ethylene glycol dimethacrylate, bisphenol A diglycidyl dimethacrylate, styrene, and hydroxypropyl methacrylate.

After the reaction is complete, the polyester can also be diluted with acrylate-containing polymerizable solvents.

The present invention will now be described only by way of example.

In the following Examples, all quantities expressed as percents are percent by weight unless otherwise specified. Also, the following abbreviations have been used: in (inch); cm (centimetres); g (grams); Hg (mercury); lbs (pounds); kg (kilograms); meq (milliequivalents); MEHQ (p-methoxyhydroquinone); mL (milliliters); NMR (nuclear magnetic resonance); TMG (tetramethylguanidine); TBA-OH (tetrabutylammonium hydroxide); and wt (weight).

### EXAMPLE 1

In a flask equipped with a thermometer, mechanical stirrer, nitrogen sparge, steam condenser, Dean-Stark trap, and water condenser was placed 145.1 g fumaric acid, 182.7 g adipic acid, 247.8 g 1,2-butanediol, 1.2 g dibutyl tin oxide and 1.2 g triphenylphosphite. The mixture was heated to 200°C and water was collected in the Dean-Stark trap for one hour. Enough xylene was then added to maintain reflux at 200°C with continued azeotropic distillation of water. The reaction was continued for six hours until the acid titer was below 0.02 meq/g. The xylene was then removed by vacuum distillation and the reaction mixture was cooled. To this polyester was added 267.8 g acetoacetoxyethyl methacrylate and 1.5 g phenothiazine.

The extent of the Michael reaction of acetoacetoxyethyl methacrylate with the unsaturated polyester was followed by determining the loss of unsaturation in the polyester using NMR measurements. A series of experiments was run in which reactive mixtures were made by mixing 8.0 g polyester/ monomer blend, 3.4 g methyl ethyl ketone and the specified catalyst in the amount indicated in the Tables below. The percent reaction is calculated by determining the percent of original sites of unsaturation in the polyester that have disappeared by a Michael reaction with acetoacetoxyethyl methacrylate.

### I. Catalyst: 1.0 molar solution of tetrabutylammonium hydroxide in methanol (TBA-OH)

**Table I. A.**

| The following table reports the % Reaction at 23°C observed at the indicated times using the stated amount of TBA-OH catalyst | | | | | | |
|---|---|---|---|---|---|---|
| TBA-OH | 0.5 h | 1 h | 4 h | 7 h | 24 h | 96 h |
| 0.13 g | 0 | 6 | 16 | 21 | 20 | 31 |
| 0.67 g | 57 | 60 | 78 | 80 | 88 | >95 |

.

**Table I. B.**

| The following table reports the % Reaction at 60°C observed at the indicated times using the stated amount of TBA-OH catalyst. | | | | |
|---|---|---|---|---|
| TBA-OH | 0.5 h | 1 h | 4 h | 7 h |
| 0.13 g | 22 | 28 | 31 | 41 |
| 0.67 g | 77 | 81 | -- | -- |

### II. Catalyst: tetramethylguanidine (TMG)

**Table II. A.**

| The following table reports the % Reaction at 23°C observed at the indicated times using the stated amount of TMG catalyst. | | | |
|---|---|---|---|
| TMG | 0.5 h | 3 h | 7 h |
| 0.02 g | 5 | 24 | 53 |
| 0.10 g | 55 | 81 | 93 |
| 0.20 g | 82 | 93 | >95 |

**Table II. B.**

| The following table reports the % Reaction at 65°C observed at the indicated times using the stated amount of TMG catalyst. | |
|---|---|
| TMG | 0.5 h |
| 0.02 g | 31 |
| 0.10 g | 75 |

The data in these Tables show that the rate of formation of the methacrylate-functional polyester can be controlled by the choice of strong base catalyst, the level of catalyst or the temperature.

### EXAMPLE 2.

A methacrylate-functional polyester (A) is prepared according to the following procedure. In a flask equipped with a thermometer, mechanical stirrer, nitrogen sparge, steam condenser, Dean-Stark trap, and water condenser was placed 121.8 g adipic acid, 138.4 g isophthalic acid, 381.9 g neopentyl glycol, 3.3 g dibutyl tin oxide, 0.1 g benzoylacetone and 1.6 g triphenylphosphite. The mixture was heated to 200°C and water was collected in the Dean-Stark trap. After three hours, 193.5 g fumaric acid was added and the heating continued for eight hours until the acid level was below 0.02 meq/g. The mixture was diluted with xylene and cooled to room temperature to give a 68.9 % solution of polyester in xylene. To 350 grams of the cooled mixture was added 292.2 g acetoacetoxyethyl methacrylate monomer and 3.67 g sodium ethoxide. The reaction was stirred at 25 °C for twelve hours, then quenched with 3.0 g acetic acid. The methacrylate-functional polyester was formulated with 1 wt % of diethoxyacetophenone photoinitiator and coatings were made, allowed to air dry for 2-3 hours and then cured under ultraviolet light by one pass through a UV processor (Model QC1202, PPG Industries) equipped with medium pressure mercury vapor arc lamps set at 78.7 watts/cm (200 watts/inch) with a belt speed of 6.1 m/minute (20 feet/minute). Film properties were determined.

| | |
|---|---|
| Impact Strength: | 92-115 cm-kg (80-100 in-lbs). |
| Reverse Impact: | 53-57 cm-kg (40-50 in-lbs). |
| Swell Ratio: | 1.2-1.3 |
| Knoop Hardness: | 8 |
| Pencil Hardness: | 2H |
| Tensile Strength: | 5033174 Nm⁻² (730 psi) |
| Elongation: | 25% |
| Humidity Response (QCT, 1OOOh): | No loss in gloss |
| Thermogravimetric Analysis: | Stable to 400 °C |
| Water Vapor Transmission | 0.23 g/h-sq. m |
| Tg: | 0-2 °C |

### EXAMPLE 3

A higher molecular weight methacrylate-functional polyester (B) can be made by chain extension of the polyester using a diisocyanate prior to functionalization with acetoacetoxyethyl methacrylate according to the following procedure. A polyester of similar composition to the polyester in Example 2 was made in a similar fashion and diluted to 84.6% solids in xylene. To 500 grams of this mixture was added 21.9 grams of isophorone diisocyanate and 0.2 grams of a titanate catalyst and the reaction was stirred for 7 hours at 25 °C. The mixture was diluted with isopropyl alcohol to give a 48.4% solution.

To 200 grams of this solution was added 45.6 g acetoacetoxyethyl methacrylate, 2.3 g 25 wt % solution of sodium methoxide in methanol and 0.14 g MEHQ. The mixture was stirred for 7.5 hours at 25 °C and then 1.0 g methanesulfonic acid was added to give a 43.0% solution.

### EXAMPLE 4

A high solids methacrylate-functional polyester (C) was made according to the following procedure. In a flask equipped with a thermometer, mechanical stirrer, nitrogen sparge, steam condenser, Dean-Stark trap and water condenser was placed 860.9 g diethyl fumarate, 536.7 g dipropylene glycol, 5.59 g dibutyl tin oxide and 2.79 g triphenyl phosphite. The mixture was heated to 200°C with ethanol distillate collected in the Dean-Stark trap. The temperature was maintained at 200°C until distillate production ceased (a total cooking time of 7.5 hours). The reaction was cooled to give a 94.5 % solution.

To 150 g of this solution was added 156.4 g acetoacetoxyethyl methacrylate, 7.9 g 25 weight % solution of sodium methoxide in methanol and 0.5 g MEHQ inhibitor for a period of 7.5 hours and then 3.5 g methanesulfonic acid was added to neutralize the mixture. A 10 mm Hg vacuum was applied to the mixture for 2 hours to remove volatile materials to give a 94.5 % solution.

### EXAMPLE 5

The methacrylate-functional polyesters A, B and C were formulated with 1 wt % of Irgacure 184 photoinitiator (Ciba-Geigy). Methacrylate-functional polyester C was diluted with 1,6-hexandiol diacrylate to give a 65/35 ratio of polyester to monomer. Films were made and air dried for three hours to give 0.0025 cm (1 mil) thick films and then cured under ultraviolet radiation by one pass through a UV processor (Model QC1202, PPG Industries) equipped with medium pressure mercury vapor arc lamps set at 78.7 watts/cm (200 watts/inch) with a belt speed of 6.1 m/minute (20 feet/minute). The following film properties were then determined.

| Film | I | II | III |
|---|---|---|---|
| Methacrylate-Polyester | A | B | C |
| Direct Impact cm-kg (In-lbs) | 92-114 (80-100) | >137 (>120) | `33 (25) |
| Reverse Impact cm-kg (in-lbs) | 69-92 (60-80) | 114-137 (100-120) | <2.2 (<2) |
| Knoop Hardness | 9 | 4 | 12 |
| Pencil Hardness | 3H | H | 6H |
| Tensile Strength x 10³ Nm⁻² (psi) | 16953 (2457) | 21748 (3152) | 1398 (1652) |
| Elongation (%) | 17 | 31 | 1.5 |

This example shows that these polymers can be cured under UV light to give good film properties.

### EXAMPLE 6

Comparative polyester D was made according to the following procedure. In a flask equipped with a thermometer, mechanical stirrer, nitrogen sparge, steam condenser, Dean- Stark trap, and water condenser was placed 188.0 g propane-1,2-diol, 46.4 g 1500 molecular weight polyethylene glycol, 196.4 g maleic anhydride, 0.4 g dibutyl tin oxide and 0.4 g triphenylphosphite. The mixture was heated to 200°C and the water was collected in the Dean-Stark trap for eight hours. Approximately 100 mL of xylene was then added and the mixture refluxed for 5 hours to bring the acid titer to 0.024 meq/g. The reaction mixture was cooled and diluted with isopropyl alcohol to give a 84.5% solution. NMR analysis shows the presence of 3 mole % maleate double bonds and 97 mole % fumarate double bonds.

### EXAMPLE 7

A methacrylate-functional polyester (E) with partial functionalization with acetoacetoxyethyl methacrylate was made according to the following procedure. To a stirred solution of 150 g of the polyester D was added 7.4 mL of a 25% solution of sodium methoxide in methanol, 34.2 g acetoacetoxyethyl methacrylate and 6.31 g isopropyl alcohol. After one hour, 3.1 g methanesulfonic acid diluted with 17.0 g isopropyl alcohol was added to give the methacrylate-functional polyester consisting of 2 mole % maleate unsaturation, 63% fumarate unsaturation and 34% methacrylate unsaturation.

### EXAMPLE 8

A methacrylate-functional polyester (F) with partial functionalization with acetoacetoxyethylmethacrylate was made according to the following procedure. To a stirred solution of 150 grams of the polyester D was added 7.4 mL of a 25% solution of sodium methoxide in methanol, 68.5 grams of acetoacetoxyethylmethacrylate and 25.6 grams of isopropyl alcohol. After one hour, 3.1 grams of methanesulfonic acid diluted with 17.0 grams of isopropyl alcohol was added to give a the methacrylate-functional polyester consisting of 2% maleate unsaturation, 29% fumarate unsaturation and 68% methacrylate unsaturation.

### EXAMPLE 9

Comparative polyester (G) was made according to the following procedure. In a flask equipped with a thermometer, mechanical stirrer, nitrogen sparge, steam condenser, Dean- Stark trap, and water condenser was placed 195.9 g 2-methyl-2-propyl-1,3-propanediol, 46.4 g of a 1500 molecular weight polyethylene glycol, 117.7 g maleic anhydride, 0.32 g dibutyl tin oxide, and 0.32 g triphenylphosphite. The mixture was heated to 200°C and water was collected in the Dean-Stark trap for 1.5 hours. Enough xylene was then added to reflux the mixture at 200°C with continued azeotropic distillation of water. After three hours, the mixture was cooled to give a 88.4% solution with an acid titer of 0.013 meq/g. NMR analysis shows 41% maleate unsaturation and 59% fumarate unsaturation.

### EXAMPLE 10

A methacrylate-functional polyester (H) with partial functionalization with acetoacetoxyethyl methacrylate was made according to the following procedure. To a stirred solution of 150 g of the polyester G was added 5.7 mL of a 25% solution of sodium methoxide in methanol, 26.6 g acetoacetoxyethyl methacrylate and 22.3 g isopropyl alcohol. After two hours, 2.4 g methanesulfonic acid was added to give the methacrylate-functional polyester consisting of 41% maleate unsaturation, 33% fumarate unsaturation and 26% methacrylate unsaturation.

### EXAMPLE 11

A methacrylate-functional polyester (I) with partial functionalization with acetoacetoxyethyl methacrylate was made according to the following procedure. To a stirred solution of 150 g of the polyester G was added 5.7 mL of a 25% solution of sodium methoxide in methanol, 53.1 g acetoacetoxyethyl methacrylate and 29.0 g isopropyl alcohol. After two hours, 2.4 g methanesulfonic acid was added to give the methacrylate-functional polyester consisting of 36% maleate unsaturation, 16% fumarate unsaturation and 49% methacrylate unsaturation.

### EXAMPLE 12

Comparative polyesters D and G and methacrylate-functional polyesters E, F H and I were formulated with 4 wt % Darocur 1173 (EM Chemicals) and films were made and air- dried to give 0.00254 cm (1 mil) thick films. These films were cured under ultraviolet light by one pass through a UV processor (Model QC1202, PPG Industries) equipped with medium pressure mercury vapor arc lamps set at 78.7 watts/cm (200 watts/inch) with a belt speed of 6.1 m/minute (20 feet/minute). Film properties were then determined.

| Film | Pol. | Print | Mar | Pencil Hardness | Direct Impact | MEK Rubs |
|---|---|---|---|---|---|---|
| IV | D | 1 | 5 | F | >50 | 75 |
| V | E | 0.5 | 4 | B | >20 | 168 |
| VI | F | 0.5 | 5 | F | >16 | 200 |
| VII | G | 2 | 0 | 6B | >50 | 23 |
| VIII | H | 1 | 0 | B | >50 | 56 |
| IX | I | 1 | 0 | F | >28 | 190 |

[Print Rating: 0-5(O=best); Mar Rating: 0-5(5=best)]

Films V and VI showed improvement over Comparative Film IV and Films VIII and IX showed improved properties compared to Comparative Film VII, respectively.

### EXAMPLE 13

A 100% reactive solids methacrylate-functional polyester J can be made by functionalization of acetoacetoxyethyl methacrylate in a monomer syrup according to the following method. In a flask equipped with a thermometer, mechanical stirrer, nitrogen sparge, steam condenser, Dean-Stark trap, and water condenser was placed 580.4 g fumaric acid, 365.4 g adipic acid, 415.3 g isophthalic acid, 1145.7 g neopentyl glycol, 5. g dibutyl tin oxide and 5. g triphenylphosphite. The mixture was heated to 200°C and the water was collected in the Dean-Stark trap. The reaction was continued until the acid level was below 0.02 meq/g (a total cooking time of 8-10 hours). A 10 mm Hg vacuum was then applied to remove all volatile materials. The mixture was then cooled to room temperature.

To 434 g of the cooled mixture was then added 214.2 g acetoacetoxyethyl methacrylate, 2.7 g sodium ethoxide, 289.3 g methyl methacrylate, and 1.5 g MEHQ inhibitor. The reaction was stirred at 25°C for eight hours and the reaction was quenched with 3.0 grams of acetic acid.

### EXAMPLE 14

Cast plastic sheet materials can be made with methacrylate-functional polyesters dissolved in monomer syrups thermally cured using radical initiators as indicated below. A methacrylate-functional polyester K was made according to the following procedure. In a flask equipped with a thermometer, mechanical stirrer, nitrogen sparge, steam condenser, Dean-Stark trap, and water condenser was placed 580.4 g fumaric acid, 730.7 g adipic acid, 1145.7 g neopentyl glycol, 4.9 g dibutyl tin oxide and 4.9 g triphenylphosphite. The mixture was heated to 190 °C and water was collected in the Dean-Stark trap over a period of about three hours. A 10 mm Hg vacuum was applied for 1.5 hours while the heating continued and then the mixture was cooled.

To 681.6 g of the polyester was added 320 g acetoacetoxyethyl methacrylate, 224 g methyl methacrylate, and 9.4 g tetramethylguanidine and the mixture was stirred for 8 hours before quenching with acetic acid to give a 81.7% solution in methyl methacrylate.

Cast plastic sheet 1 was made from a formulation consisting of 340 g methacrylate-functional polyester K, 30. g methyl methacrylate, 3.5 g cumene hydroperoxide, and 0.9 g benzoyl peroxide.

Cast plastic sheet 2 was made from a formulation consisting of 257 g of methacrylate-functional polyester K, 92.0 g methyl methacrylate, 3.5 g cumene hydroperoxide, and 0.9 g benzoyl peroxide.

A glass reinforced cast plastic sheet 3 was made from a formulation consisting of 191.6 g of methacrylate-functional polyester K, 69.3 g methyl methacrylate, 0.6 g benzoyl peroxide, 2.6 g cumene hydroperoxide and 111.4 g of 0.635 cm (1/4") chopped glass fiber.

Cast plastic sheets were made by pouring the formulated mixtures into a mold made from glass sheets with a vinyl separator. The mold was then heated in an oven according to the following schedule: 2 hours at 80°C, 2 hours at 100°C, 2 hours at 120°C. Properties were then determined.

| Sheet | Shrinkage | Izod Impact | | Rockwell Hardness | Flexural Hardness |
|---|---|---|---|---|---|
| | (%) | (width) | m-kg (ft-lbs) | | |
| A | 12.2 | 0.149 | 0.17 (1.21) | M6 | 24777 |
| B | 16.8 | 0.136 | 0.07 (0.52) | M36 | 123087 |
| C | | 0.133 | 1.4 (10.3) | | 728992 |

## Claims

1. A reactive multi-functional methacrylate-polyester obtainable from a Carbon-Michael reaction of a polyester having unsaturated functionality and an acetoacetoxyethyl methacrylate monomer in the presence of a strong base catalyst.

2. The multi-functional methacrylate-polyester of claim 1 wherein said polyester is a maleate or fumarate functional polyester.

3. The multi-functional methacrylate-polyester of claim 1 or claim 2 wherein said strong base catalyst is selected from the group consisting of tetramethylguanidine, tetrabutylammonium hydroxide, and sodium ethoxide.

4. A reactive gel coat containing the multi-functional methacrylate-polyester of any one of claims 1 to 3.

5. A radiation curable composition comprising the multi-functional methacrylate-polyester of any one of claims 1 to 3 or the composition of claim 4 and a photoinitiator.

6. A process for preparing a reactive multifunctional methacrylate-polyester comprising reacting an unsaturated polyester with an acetoacetoxyethyl methacrylate monomer in the presence of a strong base catalyst.

7. The process of claim 6 in which the reaction is run in the absence of solvent.

8. The process of claim 6 in which the reaction is run in a methacrylate-functional polymerizable solvent.

9. The process of claim 8 in which the polymerizable solvent is selected from the group consisting of methyl methacrylate, butyl methacrylate, ethylene glycol dimethacrylate and hydroxypropyl methacrylate.

## Patentansprüche

1. Reaktiver multifunktioneller Methacrylat-polyester, herstellbar durch eine Kohlenstoff-Michael-Reaktion eines Polyesters mit ungesättigter Funktionalität und einem Acetoacetoxyethyl-methacrylat-Monomer in Gegenwart eines stark basischen Katalysators.

2. Multifunktioneller Methacrylat-polyester nach Anspruch 1, wobei der Polyester ein Maleat- oder Fumarat-funktioneller Polyester ist.

3. Multifunktioneller Methacrylat-polyester nach Ansprüchen 1 oder 2, wobei der stark basische Katalysator ausgewählt ist aus der Gruppe bestehend aus Tetramethylguanidin, Tetrabutylammoniumhydroxid und Natriumethoxid.

4. Reaktiver Gelüberzug, enthaltend den multifunktionellen Methacrylat-polyester nach einem der Ansprüche 1 bis 3.

5. Durch Bestrahlung härtbare Masse, enthaltend den multifunktionellen Methacrylat-polyester nach einem der Ansprüche 1 bis 3 oder die Zusammensetzung nach Anspruch 4 und einen Photoinitiator.

6. Verfahren zur Herstellung eines reaktiven multifunktionellen Methacrylat-polyesters, bei dem ein ungesättigter Polyester mit einem Acetoacetoxyethyl-methacrylat-Monomer in Gegenwart eines stark basischen Katalysators umgesetzt wird.

7. Verfahren nach Anspruch 6, bei dem die Reaktion in Abwesenheit von Lösungsmittel erfolgt.

8. Verfahren nach Anspruch 6, bei dem die Umsetzung in einem Methacrylat-funktionellen polymerisierbaren Lösungsmittel erfolgt.

9. Verfahren nach Anspruch 8, bei dem das polymerisierbare Lösungsmittel ausgewählt ist aus der Gruppe bestehend aus Methylmethacrylat, Butylmethacrylat, Ethylenglykoldimethacrylat und Hydroxypropylmethacrylat.

## Revendications

1. Polyester méthacrylate polyfonctionnel réactif, pouvant être obtenu à partir d'une réaction de Michael sur carbone d'un polyester ayant une fonctionnalité insaturée et d'un méthacrylate d'acétoacétoxyéthyle monomère en présence d'un catalyseur de type base forte.

2. Polyester méthacrylate polyfonctionnel selon la revendication 1, dans lequel ledit polyester est un polyester à fonctionnalité maléate ou fumarate.

3. Polyester méthacrylate polyfonctionnel selon la revendication 1 ou 2, dans lequel ledit catalyseur de type base forte est choisi dans le groupe constitué par la tétraméthylguanidine, l'hydroxyde de tétrabutylammonium et l'éthylate de sodium.

4. Enduit gélifié réactif contenant le polyester méthacrylate polyfonctionnel selon l'une quelconque des revendications 1 à 3.

5. Composition durcissable par un rayonnement comprenant le polyester méthacrylate polyfonctionnel selon l'une quelconque des revendications 1 à 3 ou la composition de la revendication 4 et un photo-amorceur.

6. Procédé pour préparer un polyester méthacrylate polyfonctionnel réactif, comprenant la réaction d'un polyester insaturé avec un méthacrylate d'acétoacétoxyéthyle monomère en présence d'un catalyseur de type base forte.

7. Procédé selon la revendication 6, dans lequel la réaction se déroule en l'absence de solvant.

8. Procédé selon la revendication 6, dans lequel la réaction se déroule dans un solvant polymérisable à fonctionnalité méthacrylate.

9. Procédé selon la revendication 8, dans lequel le solvant polymérisable est choisi dans le groupe constitué par le méthacrylate de méthyle, le méthacrylate de butyle, le diméthacrylate d'éthylèneglycol et le méthacrylate d'hydroxypropyle.
